# EUROPEAN PATENT SPECIFICATION

(11) **EP 1 758 407 B1**
(45) Date of publication and mention of the grant of the patent: **03.06.2009**
(21) Application number: 05759550.6
(22) Date of filing: 22.06.2005
(51) Int. Cl.: H04W 4/10

(54) **METHOD FOR A MOBILE STATION TO HANDOVER BETWEEN CELLS**
VERFAHREN ZUR INTERZELLULÄREN ÜBERGABE FÜR EINE MOBILESTATION
PROCEDE DE TRANSFERT INTERCELLULAIRE POUR UNE STATION MOBILE

(30) Priority: 22.06.2004 CN 200410059921
(43) Date of publication of application: 28.02.2007
(73) Proprietor: Huawei Technologies Co., Ltd., Longgang District, Shenzhen Guangdong 518129 (CN)
(72) Inventor: XIA, Zhili, Shenzhen Guangdong 518129 (CN)
(74) Representative: Manitz, Finsterwald & Partner GbR
(86) International application number: PCT/CN2005/000897
(87) International publication number: WO 2005/125225

(56) References cited:
- EP-A- 0 570 643
- EP-A1- 0 660 625
- EP-A1- 1 379 013
- EP-A2- 1 332 639
- WO-A-96/20573
- CN-A- 1 601 948
- GB-A- 2 327 576
- US-A- 5 018 187

## Description

### Field of the Invention

The present invention relates to handover technologies in communication systems, and particularly, to a method for a Mobile Station (MS) of a private speaker to hand over between cells during a private call.

### Background of the invention

Trunking communication networks have been widely applied in various communication environments. As to trunking communication networks constructed adopting ideas of private trunking networks, each private trunking network may be constructed separately and operate independently due to their different techniques and organics, which tends to form a situation that each does things in its own way and leads to a low network utilization ratio, a high network construction cost and a high network maintenance cost.

With the development of the trunking communication technology from analogue to digital, the construction tendency of the trunking communication network is changing from independent private networks to a public trunking network. At present, Global System for Mobile communication (GSM) has advanced technical schemes and broad user foundations all over the world. Therefore the development of digital trunking system based on GSM is not only in accordance with the developing trend of public trunking network, but also provides a good foundation for development of the trunking communication technology. At present, digital trunking system based on GSM, namely, GT800 system has already emerged.

The GT800 system supports Voice Private Call Service (VPCS), which is implemented based on group call technology. The VPCS has the following features: the initiation and the preemption of the speaking chance of a private call are performed in a Push-to-Talk (PTT) mode, the time for establishing a private call is very short, and it operates in a half-duplex mode. Specifically, a private call is a special scheduling group call between two MSs in a group, and a group call area includes only the cells where the two private call sides are currently located. Although being dynamically changed following the movements of the two private call sides, the group call area always includes only the cells where the two private call sides are currently located, thus a private speaker and a private listener in the group call area can establish a private call. The private call operates in the half-duplex mode, i.e., one of the private call sides presses the PTT key to talk while the other side who does not press the PTT key listens to the voice. The private speaker is in a group call transmitting mode and the private listener is in a group call receiving mode. When located in the same cell, the two private call sides share a Traffic Channel (TCH) and preempt an uplink of the TCH through pressing the PTT key; when located in different cells, each of the two private call sides occupies a TCH respectively and the two sides preempt a speaking chance still through pressing the PTT key.

A private call should be held when the MS of the private speaker hands over to another cell during the private call, i.e., the voice signals of the private speaker can still be transmitted to the MS of the private listener during the handover.

The signaling link of a private call, i.e. the A interface, between a Base Station Controller (BSC) of each cell and a Mobile Station Controller (MSC) has a Signaling Connection Control Part (SCCP) connection used for transmitting signaling interaction information. Each MS has to transmit signaling through the SCCP connection, therefore when the MS of the private speaker hands over to another cell, the MS of the private speaker has to transmit signaling through the SCCP connection of the A interface of the target cell, i.e., when the MS of the private speaker hands over to another cell, the SCCP connection of the A interface of the MS of the private speaker has to be handed over accordingly. The handover includes a handover within the coverage of the BSC and a handover between BSCs. Moreover, there is also a Circuit (CIC) on the A interface for interaction of voice bit streams born by the physical layer. When the MS of the private speaker hands over between BSCs, a new CIC has to be adopted.

It can be seen from the fore-going descriptions that a new SCCP connection shall be established when the MS of the private speaker hands over to another cell during a private call, and a new CIC is further required when the handover is performed between BSCs.

There are two handover methods in the related art, one is used for point-to-point calls, and the other is used for group calls.

In the handover method for point-to-point calls, since each of the MSs under a BSC corresponds to an A interface, and each A interface has one SCCP connection and one CIC, the MS need not change the CIC and SCCP connection of the A interface before and after the handover if only hands over between cells under the same BSC. However, for a private call, only one SCCP connection and one CIC are needed in a cell, thus the handover method for point-to-point calls is not applicable to the inter-cell handover of private calls.

International patent application WO 96/20573 provides a method for maintaining a group call in a mobile communication system. In the method, a traffic channel is reserved for a group call from each of the base stations adjacent to the base station to which the mobile station is registered. The reservation is carried out both when the group call is being established and when a mobile station participating in the group call is moving from the coverage area of the first base station to the coverage area of the second base station, and registers itself to said second base station.

In the handover method for group calls, since the system can learn in which cells that the group call members may locate, it may establish SCCP connections in these cells for the MS in advance, and may allocate CICs at the same time, the number of CICs is equal to the number of the cells. Therefore a corresponding SCCP connection and a CIC can be selected on demand. However, the system cannot learn in which cell the MS of the private speaker may locate, so if the handover method for group calls is adopted, the SCCP connections and CICs as many as the cells should be established in advance for the MS of the private speaker so that the MS may select an appropriate SCCP connection and a CIC according to the type of the handover. In practice, the MSs of the two private call sides do not have to establish so many CICs and SCCP connections, e.g., when the private speaker and the private listener are in the same cell, only one CIC is needed to exchange voice bit streams born by the physical layer between the two MSs, and only one SCCP connection is needed to transmit signaling. Even if the private speaker and the private listener are not in the same cell, each of them needs only one SCCP connection and one CIC respectively. Therefore the method for group calls consumes large amount of network resources of the trunking system and greatly decreases the private call capacity supported by the system.

To sum up, the existing handover methods are not suitable for the private call, which is a special type of call.

In addition, the existing private call is implemented based on the group call, which means a group call notification is required to be issued through a Notification Channel (NCH) regularly and the MS determines to perform operations including private call relay and handover according to the group call notification. The issuance of the group call notifications occupies a part of NCH resources.

UK patent application GB 2327576 A provides a method that allows a communication channel assigned to a radio zone to be released in the situation in which a group communication mobile station is not present in a group communication radio zone, so as to improve the frequency use ratio.

### Summary of the invention

Embodiments of the present invention provide a method for a Mobile Station (MS) of a private speaker to hand over between cells, so that a private call may not be impacted when the MS of the private speaker hands over during the private call, and at the same time, the resources consumed on the network side of a trunking system may not increase.

A method for an MS of a private speaker to hand over between cells according to claim 1 includes:
sending, by a Base Station Controller (BSC) of an original cell, a handover required message to a Mobile Service Center (MSC) when the BSC of the original cell determines that the MS of the private speaker requires a handover;
after receiving the handover required message, determining, by the MSC, a Signaling Connection Control Part (SCCP) connection and a Circuit (CIC) number in a target cell for the MS of the private speaker, and sending a handover request including the determined CIC number to a BSC of the target cell through the SCCP connection;
assigning, by the BSC of the target cell, a channel to the MS of the private speaker in the target cell after receiving the handover request, and determining a corresponding CIC according to the CIC number;
sending, by the MSC, to the MS of the private speaker through the BSC of the original cell a handover command including information of the assigned channel and the CIC number;
initiating, by the MS of the private speaker, to establish an air interface connection to the target cell after receiving the handover command through the assigned channel, and exchanging voice bit streams born by a physical layer through the CIC.

Through the information interaction between the MSC and the original cell and between the MSC and the target cell, the embodiments of the present invention enable the MS of the private speaker to hold a private call while moving between cells, ensure that the private call will not be interrupted when the MS of the private speaker hands over between cells, and thus improve the channel utilization ratio and network service performance while consuming few resources to support the private call on the network side. Furthermore, the embodiments of the present invention may increase the traffic of the private call and enhance the system stability.

In embodiments of the present invention, no notification message needs to be sent on the Notification Channel (NCH) of the cell, therefore the load of the NCH does not increase, which further saves the resources of NCH.

The embodiments of the present invention also solve the problems of dynamic management of the SCCP and the variation of the CIC of the private call implemented according to the principle of the group call, therefore handover problems for the private speaker between cells under one MSC are solved with this solution.

### Brief Description of the Drawings

Fig. 1 is a schematic diagram illustrating message interaction of an inter-cell private call which remains an inter-cell private call after the handover according to an embodiment of the present invention.
Fig. 2 is a schematic diagram illustrating message interaction of an inter-cell private call which is changed into an intra-cell private call after the handover according to an embodiment of the present invention.
Fig. 3 is a schematic diagram illustrating message interaction of an intra-cell private call which is changed into an inter-cell private call after the handover according to an embodiment of the present invention.

### Embodiments of the Invention

The channel resources in a trunking system are very limited. When two private call sides are located in the same cell, they share a Traffic Channel (TCH). This kind of private call is referred to as an intra-cell private call. The intra-cell private call adopts a half-duplex mode, the downlink channel is shared by the two private call sides and the uplink is preempted through the Push-to-Talk (PTT) key. When the two private call sides are located in different cells, each of them occupies a TCH respectively, and this kind of private call is referred to as an inter-cell private call. The inter-cell private call also adopts the half-duplex mode and the two private call sides preempt a speaking chance still through the PTT key.

According to the types of the private calls before and after the handover of the MS of the private speaker, the handover of the MS of the private speaker during a private call may be divided into three types:
1) an inter-cell private call remains an inter-cell private call after the handover of the MS of the private speaker;
2) an inter-cell private call is changed into an intra-cell private call after the handover of the MS of the private speaker;
3) an intra-cell private call is changed into an inter-cell private call after the handover of the MS of the private speaker.

The three types of handovers can be implemented through the following steps:
Step A: a BSC of an original cell sending a handover request to a corresponding MSC when the BSC determines the MS of the private speaker requires a cell handover;
Step B: after receiving the handover request, the MSC determining an SCCP connection and a CIC number in the target cell for the MS of the private speaker, and sending a handover request including the determined CIC number to the BSC of the target cell through the SCCP connection;
Step C: the BSC of the target cell assigning a channel to the MS of the private speaker in the target cell after receiving the handover request, and determining a corresponding CIC according to the CIC number;
Step D: the MSC sending a handover command including information of the channel and the CIC number to the MS of the private speaker through the BSC of the original cell;
Step E: the MS of the private speaker establishing an air interface connection to the target cell after receiving the handover command through the assigned channel, and exchanging voice bit streams born by a physical layer through the CIC to implement the handover.

The three types of handovers are further explained hereinafter with reference to accompanying drawings and embodiments.

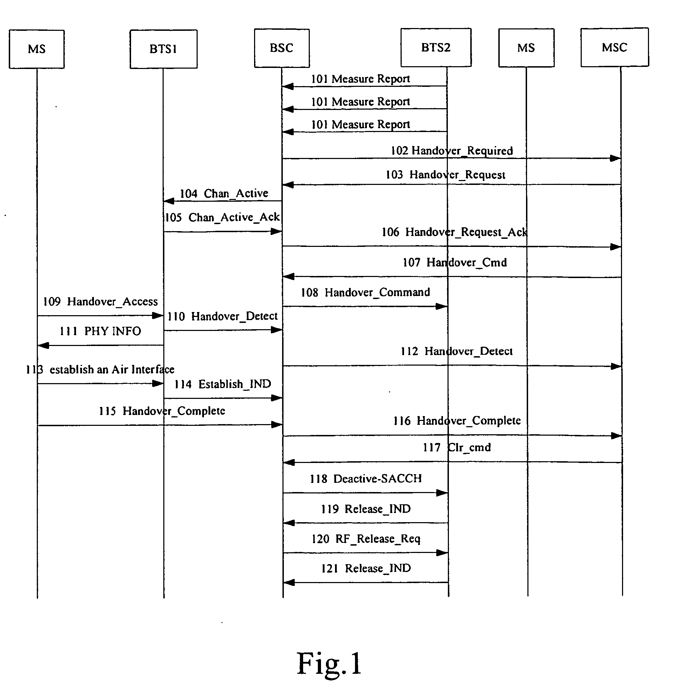

The first type of cell handover, i.e., an inter-cell private call remains an inter-cell private call after the handover of the MS of the private speaker, is explained first. The handover of the MS of the private speaker may be performed between cells under the same BSC, or between cells under different BSCs. Fig. 1 shows is a schematic diagram illustrating message interaction of a handover between cells under the same BSC, however, the message interaction of the handover between cells under different BSCs is similar. The message interaction shown in Fig. 1 includes the following steps:
Step 101: the MS of the private speaker sends a measure report (Measure Report From MS) to the BSC of the cell where the MS of the private speaker is currently located.
Step 102: the BSC performs a calculation according to the Measure Report From MS, and sends a handover request (Handover_Required) to the MSC of the BSC when the BSC determines that the MS requires a handover.
   The Handover_Required includes at least a private call parameter, relevant information of the target cell and the identity information of the private speaker.
Step 103: after receiving the Handover_Required, the MSC determines the type of handover of the MS according to the information carried in the Handover_Required, and determines an SCCP connection in the target cell, then sends a handover request (Handover_Request) to the BSC of the target cell through the SCCP connection.
   In this embodiment, the MSC determines that the handover of the MS is the first type according to the relevant information of the target cell in the Handover_Required, i.e., the inter-cell private call remains an inter-cell private call after the handover, therefore it is determined that a new SCCP connection needs to be established. Then the MSC establishes a new SCCP connection according to the private call parameter and the identity information of the private speaker in the Handover_Required. The Handover_Request includes at least the private call parameter and relevant information of the target cell, as well as the CIC number required by the private speaker when exchanging voice bit streams born by the physical layer after the handover. The relevant information of the target cell includes the channel type information required by the target cell.
   In this embodiment, the inter-cell private call remains an inter-cell private call. When the handover is performed between cells under the same BSC, the MS of the private speaker may use either the original CIC or a new CIC. To use the original CIC, the exchange relay function of the BSC is employed to take the original CIC as the CIC of the new A interface, and the MSC needs to sends the original CIC number to the BSC through the Handover_Request. If a new CIC is adopted, the MSC may define a CIC number and sends the new CIC number to the BSC through the Handover_Request. When the handover is performed between cells under different BSCs, the MS of the private speaker needs to use a new CIC.
Step 104: after receiving the Handover_Request from the MSC, the BSC of the target cell sends a channel activation request (Chan_Active) to the BTS of the target cell, i.e., the BTS1, to activate a channel in the target cell.
   As the target cell is not an existing cell for the private call, i.e., the target cell does not have a group call channel for the private call, so a group call channel needs to be activated in the target cell. To be specific, the BSC of the target cell determines a corresponding group call channel according to the private call parameter and the channel type required by the target cell in the Handover_Request, and sends a description Information Element (IE) of the group call channel through the Chan_Active to the BTS1.
   Moreover, the BSC further needs to determine a corresponding CIC according to the CIC number in the Handover_Request. If the CIC number is the original CIC number, the BSC takes the original CIC as the CIC of the new A interface through the exchange relay function. If the CIC number is of a new CIC, the BSC directly determines a CIC according to the new CIC number. The determined CIC can be used for exchanging voice bit streams born by the physical layer, which can be performed after the handover.
Step 105: after receiving the Chan_Active, the BTS1 activates the corresponding group call channel according to the description IE of the group call channel in the Chan_Active, and returns a channel activation acknowledgement (Chan_Active_Ack) to the BSC.
   The Chan_Active_Ack carries a description IE of the activated group call channel.
Step 106: after receiving the Chan_Active_Ack from the BTS1, the BSC returns a Handover request acknowledgement (Handover_Request_Ack) to the MSC.
   Similarly, the Handover_Request_Ack needs to carry the description IE of the activated group call channel. The MSC determines the group call channel to be used after the handover according to the description IE.
Step 107: after receiving the Handover_Request_Ack from the BSC of the target cell, the MSC determines that the group call channel has been established according to the description IE in the Handover_Request_Ack, and sends a handover command (Handover_Cmd) to the BSC of the original cell.
   The Handover_Cmd sent by the MSC to the BSC of the original cell carries the description IE and the CIC number.
Step 108: after receiving the Handover_Cmd, the BSC of the original cell sends a handover command (Handover_Command) to the MS.
   The Handover_Command carries the description IE and the CIC number.
Step 109: after receiving the Handover_Command, the MS reports a handover access message (Handover_Access) to the BTS 1 of the target cell through the group call channel corresponding to the description IE.
Steps 110-111: after receiving the Handover_Access, the BTS1 sends a handover detect message (Handover_Detect) to the BSC of the BTS1, and returns corresponding physical information (PHY INFO) to the MS.
   The PHY INFO includes synchronization information of establishing the uplink between the MS and the network side.
Step 112: after receiving the Handover_Detect, the BSC forwards the Handover_Detect to the MSC.
   The Handover_Detect is sent to indicate that the MS has sent a message in the cell but the connection has not yet been established.
Step 113: after receiving the PHY INFO, the MS returns a Set Asynchronous Balanced Mode (SABM) frame to the BTSI, and establishes an air interface connection.
Step 114: the BTS1 reports a link establish indication (Establish_IND) to the BSC of the BTS1.
Step 115: after establishing the air interface connection, the MS reports a handover complete message (Handover_Complete) to the BSC of the target cell.
   Then the MS may bridge to the CIC corresponding to the received CIC number, and exchange voice bit streams born by the physical layer through the CIC.
   The cell handover of the MS of the private speaker is thus completed.

In addition, after the handover, there is no MS corresponding to the private call in the original cell, therefore the corresponding SCCP connection shall be released. Furthermore, if a new CIC is adopted after the handover, the original CIC is of no use and shall also be released, i.e., be identified as idle. A non-idle CIC cannot be assigned for a call; therefore, a CIC is available for re-assignment after being released and turning to be idle. The original group call channel which is used by the private speaker shall also be released. The release of the original group call channel includes the following steps:
Step 116: after receiving the Handover_Complete, the BSC forwards the Handover_Complete to the MSC.
Step 117: after receiving the Handover_Complete, the MSC sends a command (Clr_cmd) to the BSC of the original cell to release the SCCP connection in the original cell.
   After receiving the Handover_Complete, the MSC determines that the private speaker can continue the operations related to the private call in the target cell. Therefore the private call of the private speaker is successfully held through the MSC and the BSC of the target cell, i.e., the handover private speaker has never been cut off from the private call through the process described above.
Step 118: after receiving the Clr_cmd, the BSC sends a Deactive-SACCH message to the BTS of the original cell, i.e., BTS2.
Step 119: after receiving the Deactive-SACCH, the BTS2 sends a SACCH deactivation indication (Release_IND) to the BSC.
Step 120: after receiving the Release_IND, the BSC sends an original channel RF release request (RF_Release_Req) to the BTS2, requesting to release the original group call channel.
Step 121: after receiving the RF_Release_Req, the BTS2 releases the corresponding group call channel and returns an original channel RF release acknowledgement (RF_Release_Req_Ack) to the BSC.

The handover is thus completed through the process described above when the private call remains an inter-cell private call after the handover.

The handover processes of the second and the third types are similar to the process described above, therefore only the differences are explained hereinafter.

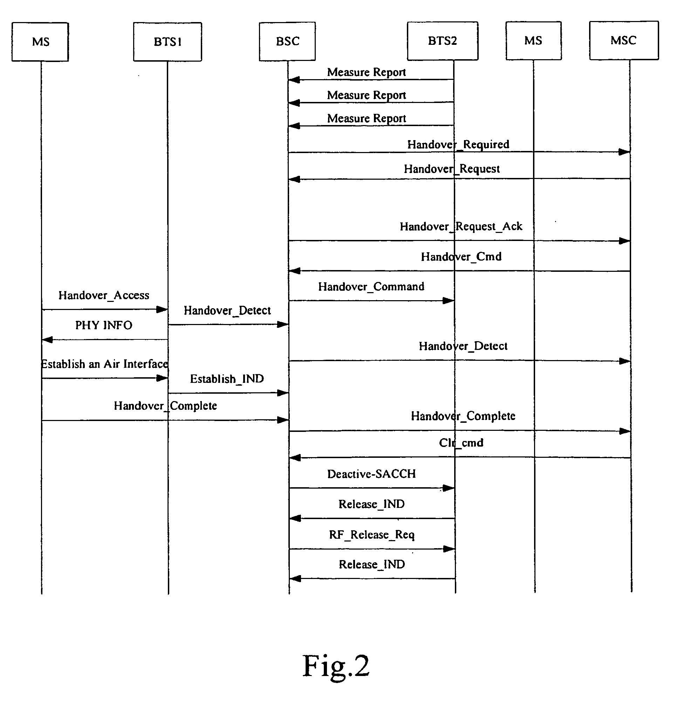

Fig. 2 is a schematic diagram illustrating message interaction of a second type of handover.

In the second type of handover, an inter-cell private call is changed into an intra-cell private call after the handover of the private speaker. Since the private speaker and the private listener located in the same cell may share a CIC and an SCCP connection, the private listener and the private speaker may share a CIC in the second type of handover, and no new CIC is needed. When the private speaker hands over to the target cell, the messages between the MS and the BSC of the target cell can be transmitted through the SCCP connection of the private listener. The MSC has to determine the SCCP connection of the private listener before communicating through the SCCP connection, to be specific, the MSC determines the SCCP connection according to the private call parameter. As the original CIC and the SCCP connection of the private speaker in the original cell are of no use after the handover, the original CIC and the SCCP connection can be released.

Another difference between the first and the second types of handover is that the target cell in the second type of handover is an existing cell for the private call, i.e., the private listener is in the target cell and there is already a corresponding group call channel in the target cell, so the BSC of the target cell need not activate the group call channel in Step 104 and Step 105. The BSC can directly obtain the description IE and sends the description IE in the Handover_Request_Ack to the MSC.

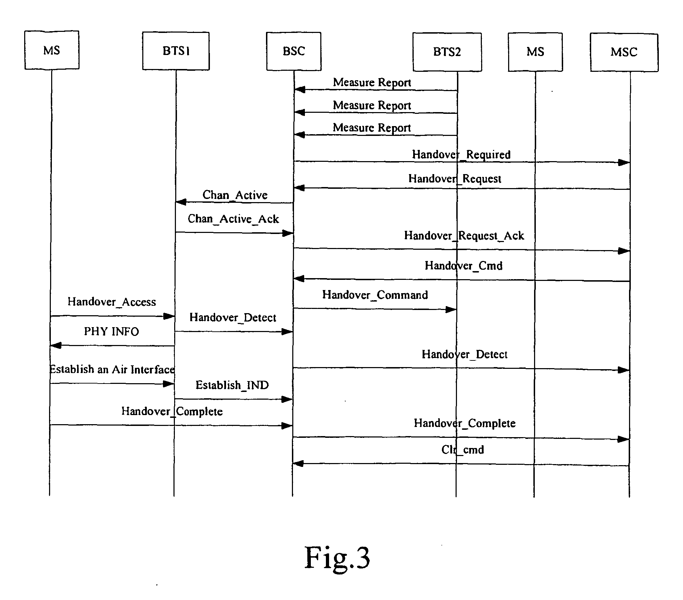

Fig. 3 is a schematic diagram illustrating message interaction of a third type of handover.

In the third type of handover, when the private speaker hands over, the intra-cell private call is changed into an inter-cell private call, i.e., the private speaker and the private call listener used to be in the same cell and share the same SCCP connection and CIC before the handover. In this type of handover, although the private speaker moves to another cell, the SCCP connection and the CIC in the original cell are still needed by the private listener. So the difference between the first and the third types of handover is that the SCCP connection and CIC in the original cell need not be released after the handover. The same step shared by the first and the third types of handover is that new SCCP connection and new CIC need to be established since there is no corresponding SCCP connections in the target cell when the private speaker hands over.

The above-mentioned are only embodiments of the present invention, which are not used to confine the protection scope of the present invention. Various changes in form and in detail made without departing from the scope of the invention as defined by the appended claims are all covered in the protection scope of the present invention.

## Claims

1. A method for a Mobile Station MS of a private speaker to hand over between cells, **characterized by**, comprising:
sending (102), by a Base Station Controller BSC of an original cell, a handover required message to a Mobile Service Center MSC when the BSC of the original cell determines that the MS of the private speaker requires a handover;
after receiving the handover required message, determining (103), by the MSC, a Signaling Connection Control Part SCCP connection and a Circuit CIC number in a target cell for the MS of the private speaker, and sending a handover request including the determined CIC number to a BSC of the target cell through the SCCP connection;
assigning (104), by the BSC of the target cell, a channel to the MS of the private speaker in the target cell after receiving the handover request, and determining a corresponding CIC according to the CIC number;
sending (107, 108), by the MSC, a handover command to the MS of the private speaker through the BSC of the original cell, the handover command includes information associated with the assigned channel and the CIC number;
initiating, by the MS of the private speaker, to establish an air interface connection between the MS of the private speaker and the target cell after receiving the handover command through the assigned channel, and exchanging voice bit streams born by a physical layer through the CIC.

2. The method of claim 1, wherein the handover required message sent by the BSC of the original cell to the MSC comprises: a private call parameter, relevant information of the target cell and identity information of the MS of the private speaker;
the step of determining an SCCP connection in the target cell for the MS of the private speaker by the MSC comprises:
determining (103), by the MSC, the types of private calls before and after the handover of the MS of the private speaker according to the relevant information of the target cell in the handover request and information of the original cell;
determining, by the MSC, the SCCP connection in the target cell for the MS of the private speaker according to the types of the private calls before and after the handover of the MS of the private speaker.

3. The method of claim 2, wherein the types of the private calls before and after the handover are both inter-cell private calls;
the step of determining an SCCP connection in the target cell for the MS of the private speaker by the MSC according to the types of the private calls comprises:
establishing (102) a new SCCP connection in the target cell according to the private call parameter and the identity information of the MS of the private speaker in the handover required message; and
determining the established new SCCP connection as the SCCP connection in the target cell of the MS of the private speaker.

4. The method of claim 3, wherein the step of determining a CIC number in the target cell for the MS of the private speaker by the MSC comprises:
determining an old CIC number in the original cell as the CIC number in the target cell for the MS of the private speaker;
the step of determining a corresponding CIC according to the CIC number by the BSC of the target cell comprises:
determining an old CIC in the original cell according to the old CIC number in the original cell and taking the old CIC as the CIC in the target cell for the MS of the private speaker by exchanging relay function.

5. The method of claim 3, wherein the step of determining a CIC number in the target cell for the MS of the private speaker by the MSC comprises:
assigning a new CIC number to the MS of the private speaker, and
determining the new CIC number as the CIC number in the target cell for the MS of the private speaker.

6. The method of claim 2, wherein the type of the private call before the handover is an inter-cell private call and the type of the private call after the handover is an intra-cell private call;
the step of determining an SCCP connection in the target cell for the MS of the private speaker by the MSC according to the types of the private calls comprises:
determining (103) an SCCP connection of a private listener in the target cell according to the private call parameter in the handover request, and
determining the determined SCCP connection as the SCCP connection of the MS of the private speaker in the target cell.

7. The method of claim 6, wherein the handover request sent by the MSC to the target cell comprises: the private call parameter and the relevant information of the target cell;
the step of assigning a channel to the MS of the private speaker in the target cell by the BSC of the target cell comprises:
obtaining a channel currently occupied by the private listener in the target cell, and
determining the obtained channel as the channel to be assigned to the MS of the private speaker.

8. The method of claim 6, wherein the step of determining a CIC number in the target cell for the MS of the private speaker by the MSC comprises:
obtaining a CIC number of the private listener, and
determining the obtained CIC number of the private listener as the CIC number in the target cell for the MS of the private speaker.

9. The method of claim 5 or 8, further comprising:
labeling the CIC of the MS of the private speaker in the original cell as idle.

10. The method of claim 3 or 6, further comprising:
after the step of initiating to establish an air interface connection between the MS of the private speaker and the target cell by the MS of the private speaker (113), releasing (118, 119, 120, 121), by the original cell, the SCCP connection between the original cell and the MS of the private speaker.

11. The method of claim 2, wherein the type of the private call before the handover is an intra-cell private call and the type of the private call after the handover is an inter-cell private call;
the step of determining an SCCP connection in the target cell for the MS of the private speaker by the MSC according to the types of the private calls comprises:
establishing (103) a new SCCP connection in the target cell according to the private call parameter and the identity information of the MS of the private speaker in the handover request; and
determining the established new SCCP connection as the SCCP connection in the target cell of the MS of the private speaker.

12. The method of claim 11, wherein the step of determining the CIC number in the target cell for the MS of the private speaker by the MSC comprises:
assigning a new CIC number to the MS of the private speaker;
determining the assigned new CIC number as the CIC number of the MS of the private speaker in the target cell.

13. The method of claim 3 or 11, wherein the handover request sent by the MSC to the target cell comprises: the private call parameter and the relevant information of the target cell;
the step of determining a channel to be assigned to the MS of the private speaker by the target cell comprises:
activating a channel in the target cell according to the private call parameter and the channel type required by the target cell.

14. The method of Claim 1, wherein the step of initiating to establish an air interface connection between the MS of the private speaker and the target cell by the MS of the private speaker comprises:
reporting (109), by the MS of the private speaker, a message including a handover access to the target cell;
returning (111), by the target cell, physical information to the MS of the private speaker after receiving the handover access message;
returning (113), by the MS of the private speaker, a Set Asynchronous Balanced Mode SABM frame to the target cell after receiving the physical information from the target cell and establishing the air interface connection.

## Patentansprüche

1. Verfahren für eine Mobilstation MS eines privaten Sprechers zum Wechseln zwischen Zellen,
**dadurch gekennzeichnet, dass**
durch einen Basisstations-Controller BSC einer ursprünglichen Zelle eine Wechsel-Erforderlich-Nachricht an eine Mobildienstzentrale MSC gesendet wird (102), wenn der BSC der ursprünglichen Zelle ermittelt, dass die MS des privaten Sprechers einen Wechsel erfordert;
nach dem Empfangen der Wechsel-Erforderlich-Nachricht durch die MSC eine Signalisierungsverbindungssteuerungsteil-Verbindung, SCCP-Verbindung, und eine Verbindungsnummer, CIC-Nummer, in einer Zielzelle für die MS des privaten Sprechers ermittelt werden (103), und eine Wechselanforderung, die die ermittelte CIC-Nummer umfasst, über die SCCP-Verbindung an einen BSC der Zielzelle gesendet wird;
durch den BSC der Zielzelle der MS des privaten Sprechers in der Zielzelle ein Kanal zugeordnet wird (104), nachdem die Wechselanforderung empfangen wurde, und gemäß der CIC-Nummer eine entsprechende CIC ermittelt wird;
durch die MSC über den BSC der ursprünglichen Zelle ein Wechselbefehl an die MS des privaten Sprechers gesendet wird (107, 108),
wobei der Wechselbefehl eine Information umfasst, die mit dem zugeordneten Kanal und der CIC-Nummer in Verbindung steht;
durch die MS des privaten Sprechers eine Herstellung einer Luftschnittstellenverbindung zwischen der MS des privaten Sprechers und der Zielzelle initiiert wird, nachdem der Wechselbefehl über den zugeordneten Kanal empfangen wurde, und über die CIC durch eine physikalische Schicht getragene Sprachbitströme ausgetauscht werden.

2. Verfahren nach Anspruch 1,
wobei die durch den BSC der ursprünglichen Zelle an die MSC gesendete Wechsel-Erforderlich-Nachricht umfasst: einen Parameter eines privaten Anrufs, eine relevante Information der Zielzelle und eine Identitätsinformation der MS des privaten Sprechers;
wobei der Schritt des Ermittelns einer SCCP-Verbindung in der Zielzelle für die MS des privaten Sprechers durch die MSC umfasst, dass
durch die MSC die Typen von privaten Anrufen vor und nach dem Wechsel der MS des privaten Sprechers gemäß der relevanten Information der Zielzelle in der Wechselanforderung und der Information der ursprünglichen Zelle ermittelt werden (103);
durch die MSC die SCCP-Verbindung in der Zielzelle für die MS des privaten Sprechers gemäß den Typen der privaten Anrufe vor und nach dem Wechsel der MS des privaten Sprechers ermittelt wird.

3. Verfahren nach Anspruch 2,
wobei die Typen der privaten Anrufe vor und nach dem Wechsel beide private Zwischenzellenanrufe sind;
wobei der Schritt des Ermittelns einer SCCP-Verbindung in der Zielzelle für die MS des privaten Sprechers durch die MSC gemäß den Typen der privaten Anrufe umfasst, dass
eine neue SCCP-Verbindung in der Zielzelle gemäß dem Parameter eines privaten Anrufs und der Identitätsinformation der MS des privaten Sprechers in der Wechsel-Erforderlich-Nachricht hergestellt wird (102); und
die hergestellte neue SCCP-Verbindung als die SCCP-Verbindung in der Zielzelle der MS des privaten Sprechers ermittelt wird.

4. Verfahren nach Anspruch 3,
wobei der Schritt des Ermittelns einer CIC-Nummer in der Zielzelle für die MS des privaten Sprechers durch die MSC umfasst, dass eine alte CIC-Nummer in der ursprünglichen Zelle als die CIC-Nummer in der Zielzelle für die MS des privaten Sprechers ermittelt wird;
wobei der Schritt des Ermittelns einer entsprechenden CIC gemäß der CIC-Nummer durch den BSC der Zielzelle umfasst, dass
eine alte CIC in der ursprünglichen Zelle gemäß der alten CIC-Nummer in der ursprünglichen Zelle ermittelt wird und die alte CIC als die CIC in der Zielzelle für die MS des privaten Sprechers durch eine Austauschweiterleitungsfunktion hergenommen wird.

5. Verfahren nach Anspruch 3,
wobei der Schritt des Ermittelns einer CIC-Nummer in der Zielzelle für die MS des privaten Sprechers durch die MSC umfasst, dass
der MS des privaten Sprechers eine neue CIC-Nummer zugeordnet wird, und
die neue CIC-Nummer als die CIC-Nummer in der Zielzelle für die MS des privaten Sprechers ermittelt wird.

6. Verfahren nach Anspruch 2,
wobei der Typ des privaten Anrufs vor dem Wechsel ein privater Zwischenzellenanruf ist und der Typ des privaten Anrufs nach dem Wechsel ein zelleninterner privater Anruf ist;
wobei der Schritt des Ermittelns einer SCCP-Verbindung in der Zielzelle für die MS des privaten Sprechers durch die MSC gemäß den Typen der privaten Anrufe umfasst, dass
eine SCCP-Verbindung eines privaten Hörers in der Zielzelle gemäß dem Parameter eines privaten Anrufs in der Wechselanforderung ermittelt wird (103), und
die ermittelte SCCP-Verbindung als die SCCP-Verbindung der MS des privaten Sprechers in der Zielzelle ermittelt wird.

7. Verfahren nach Anspruch 6,
wobei die durch die MSC an die Zielzelle gesendete Wechselanforderung umfasst: den Parameter eines privaten Anrufs und die relevante Information der Zielzelle;
wobei der Schritt des Zuordnens eines Kanals zu der MS des privaten Sprechers in der Zielzelle durch den BSC der Zielzelle umfasst, dass
ein momentan durch den privaten Hörer belegter Kanal in der Zielzelle erhalten wird, und
der erhaltene Kanal als der Kanal ermittelt wird, der der MS des privaten Sprechers zugeordnet werden soll.

8. Verfahren nach Anspruch 6,
wobei der Schritt des Ermittelns einer CIC-Nummer in der Zielzelle für die MS des privaten Sprechers durch die MSC umfasst, dass eine CIC-Nummer des privaten Hörers erhalten wird, und
die erhaltene CIC-Nummer des privaten Hörers als die CIC-Nummer in der Zielzelle für die MS des privaten Sprechers ermittelt wird.

9. Verfahren nach Anspruch 5 oder 8, das ferner umfasst, dass
die CIC der MS des privaten Sprechers in der ursprünglichen Zelle als frei **gekennzeichnet** wird.

10. Verfahren nach Anspruch 3 oder 6, das ferner umfasst, dass
nach dem Schritt des Initiierens des Herstellens einer Luftschnittstellenverbindung zwischen der MS des privaten Sprechers und der Zielzelle durch die MS des privaten Sprechers (113) durch die ursprüngliche Zelle die SCCP-Verbindung zwischen der ursprünglichen Zelle und der MS des privaten Sprechers freigegeben wird (118, 119, 120, 121).

11. Verfahren nach Anspruch 2,
wobei der Typ des privaten Anrufs vor dem Wechsel ein zelleninterner privater Anruf ist und der Typ des privaten Anrufs nach dem Wechsel ein privater Zwischenzellenanruf ist;
wobei der Schritt des Ermittelns einer SCCP-Verbindung in der Zielzelle für die MS des privaten Sprechers durch die MSC gemäß den Typen der privaten Anrufe umfasst, dass
eine neue SCCP-Verbindung in der Zielzelle gemäß dem Parameter eines privaten Anrufs und der Identitätsinformation der MS des privaten Sprechers in der Wechselanforderung hergestellt wird (103); und
die hergestellte neue SCCP-Verbindung als die SCCP-Verbindung in der Zielzelle der MS des privaten Sprechers ermittelt wird.

12. Verfahren nach Anspruch 11,
wobei der Schritt des Ermittelns der CIC-Nummer in der Zielzelle für die MS des privaten Sprechers durch die MSC umfasst, dass
der MS des privaten Sprechers eine neue CIC-Nummer zugeordnet wird;
die zugeordnete neue CIC-Nummer als die CIC-Nummer der MS des privaten Sprechers in der Zielzelle ermittelt wird.

13. Verfahren nach Anspruch 3 oder 11,
wobei die durch die MSC an die Zielzelle gesendete Wechselanforderung umfasst: den Parameter eines privaten Anrufs und die relevante Information der Zielzelle;
wobei der Schritt des Ermittelns eines Kanals, der der MS des privaten Sprechers durch die Zielzelle zugeordnet werden soll, umfasst,
dass
ein Kanal in der Zielzelle gemäß dem Parameter eines privaten Anrufs und dem durch die Zielzelle erforderlichen Kanaltyp aktiviert wird.

14. Verfahren nach Anspruch 1,
wobei der Schritt des Initiierens des Herstellens einer Luftschnittstellenverbindung zwischen der MS des privaten Sprechers und der Zielzelle durch die MS des privaten Sprechers umfasst, dass
der Zielzelle durch die MS des privaten Sprechers eine Nachricht berichtet wird (109), die einen Wechselzugriff umfasst;
durch die Zielzelle nach dem Empfangen der Wechselzugriffsnachricht eine physikalische Information an die MS des privaten Sprechers zurückgegeben wird (111);
durch die MS des privaten Sprechers ein Set Asynchronous Balanced Mode-Frame, SABM-Frame, an die Zielzelle zurückgegeben wird (113), nachdem die physikalische Information von der Zielzelle empfangen wurde und die Luftschnittstellenverbindung hergestellt wurde.

## Revendications

1. Procédé de transfert entre cellules d'une station mobile MS d'un locuteur privé, **caractérisé en ce qu'**il comprend :
l'envoi (102), par une unité de commande de station de base BSC d'une cellule originale, d'un message demandé de transfert à un centre de service mobile MSC lorsque la BSC de la cellule originale détermine que la MS du locuteur privé demande un transfert ;
après la réception du message demandé de transfert, la détermination (103), par le MSC, d'une connexion de partie de commande de connexion de signalisation SCCP et d'un numéro de circuit CIC dans une cellule cible pour la MS du locuteur privé, et l'envoi d'une demande de transfert incluant le numéro CIC déterminé à une BSC de la cellule cible par l'intermédiaire de la connexion SCCP ;
l'affectation (104), par la BSC de la cellule cible, d'un canal à la MS du locuteur privé dans la cellule cible après la réception de la demande de transfert, et la détermination d'un CIC correspondant conforme au numéro CIC ;
l'envoi (107, 108), par le MSC, d'un ordre de transfert à la MS du locuteur privé par l'intermédiaire de la BSC de la cellule originale, l'ordre de transfert comprenant une information associée au canal affecté et au numéro CIC ;
le lancement, par la MS du locuteur privé, de l'établissement d'une connexion d'interface par l'air entre la MS du locuteur privé et la cellule cible après la réception de l'ordre de transfert par l'intermédiaire du canal affecté, et l'échange de flux binaires vocaux portés par une couche physique à travers le CIC.

2. Procédé selon la revendication 1, dans lequel le message demandé de transfert envoyé par la BSC de la cellule originale au MSC comprend : un paramètre d'appel privé, une information pertinente de la cellule cible et une information d'identité de la MS du locuteur privé ;
l'étape de détermination d'une connexion SCCP dans la cellule cible de la MS du locuteur privé par le MSC comprend :
la détermination (103), par le MSC, des types d'appels privés avant et après le transfert de la MS du locuteur privé conformément à l'information pertinente de la cellule cible dans la demande de transfert et à l'information de la cellule originale ;
la détermination, par le MSC, de la connexion SCCP dans la cellule cible pour la MS du locuteur privé conformément aux types des appels privés avant et après le transfert de la MS du locuteur privé.

3. Procédé selon la revendication 2, dans lequel les types des appels privés avant et après le transfert sont tous deux des appels privés entre cellules ;
l'étape de détermination d'une connexion SCCP dans la cellule cible pour la MS du locuteur privé par le MSC conformément aux types des appels privés comprend :
l'établissement (102) d'une nouvelle connexion SCCP dans la cellule cible conformément au paramètre d'appel privé et à l'information d'identité de la MS du locuteur privé dans le message demandé de transfert ; et
la détermination de la connexion SCCP nouvellement établie en tant que connexion SCCP dans la cellule cible de la MS du locuteur privé.

4. Procédé selon la revendication 3, dans lequel l'étape de détermination d'un numéro CIC dans la cellule cible pour la MS du locuteur privé par le MSC comprend :
la détermination d'un numéro CIC ancien dans la cellule originale en tant que numéro CIC dans la cellule cible pour la MS du locuteur privé ;
l'étape de détermination d'un CIC correspondant conforme au numéro CIC par la BSC de la cellule cible comprend :
la détermination d'un CIC ancien dans la cellule originale conformément au numéro CIC ancien dans la cellule originale et le fait de prendre le CIC ancien comme CIC dans la cellule cible pour la MS du locuteur privé par un échange de fonction relais.

5. Procédé selon la revendication 3, dans lequel l'étape de détermination d'un numéro CIC dans la cellule cible pour la MS du locuteur privé par le MSC comprend :
l'affectation d'un nouveau numéro CIC à la MS du locuteur privé, et
la détermination du nouveau numéro CIC en tant que numéro CIC de la cellule cible pour la MS du locuteur privé.

6. Procédé selon la revendication 2, dans lequel le type de l'appel privé avant le transfert est un appel privé entre cellules et le type de l'appel privé après le transfert est un appel privé interne à la cellule ;
l'étape de détermination d'une connexion SCCP dans la cellule cible pour la MS du locuteur privé par le MSC en fonction des types des appels privés comprend :
la détermination (103) d'une connexion SCCP d'un auditeur privé dans la cellule cible conformément au paramètre d'appel privé dans la demande de transfert, et
la détermination de la connexion SCCP déterminée comme étant la connexion SCCP de la MS du locuteur privé dans la cellule cible.

7. Procédé selon la revendication 6, dans lequel la demande de transfert envoyée par le MSC à la cellule cible comprend : le paramètre d'appel privé et l'information pertinente de la cellule cible ;
l'étape d'affectation d'un canal à la MS du locuteur privé dans la cellule cible par la BSC de la cellule cible comprend :
l'obtention d'un canal alors occupé par l'auditeur privé dans la cellule cible,
la détermination du canal obtenu en tant que canal devant être affecté à la MS du locuteur privé.

8. Procédé selon la revendication 6, dans lequel l'étape de détermination d'un numéro CIC dans la cellule cible pour la MS du locuteur privé par le MSC comprend :
l'obtention d'un numéro CIC de l'auditeur privé,
la détermination du numéro CIC obtenu de l'auditeur privé en tant que numéro CIC dans la cellule cible pour la MS du locuteur privé.

9. Procédé selon la revendication 5 ou 8, comprenant en outre :
l'étiquetage comme libre du CIC de la MS du locuteur privé dans la cellule originale.

10. Procédé selon la revendication 3 ou 6, comprenant en outre :
après l'étape de lancement pour établir une connexion d'interface par l'air entre la MS du locuteur privé et la cellule cible par la MS du locuteur privé (113), la libération (118, 119, 120, 121), par la cellule originale, de la connexion SCCP entre la cellule originale et la MS du locuteur privé.

11. Procédé selon la revendication 2, dans lequel le type de l'appel privé avant le transfert est un appel privé interne à la cellule et le type de l'appel privé après le transfert est un appel privé entre cellules ;
l'étape de détermination d'une connexion SCCP dans la cellule cible pour la MS du locuteur privé par le MSC en fonction des types des appels privés comprend :
l'établissement (103) d'une nouvelle connexion SCCP dans la cellule cible en fonction du paramètre d'appel privé et de l'information d'identité de la MS du locuteur privé dans la demande de transfert ; et
la détermination de la connexion SCCP nouvellement établie en tant que connexion SCCP dans la cellule cible de la MS du locuteur privé.

12. Procédé selon la revendication 11, dans lequel l'étape de détermination du numéro CIC dans la cellule cible pour la MS du locuteur privé par le MSC comprend :
l'affectation d'un nouveau numéro CIC à la MS du locuteur privé ;
la détermination du numéro CIC nouvellement affecté en tant que numéro CIC de la MS du locuteur privé dans la cellule cible.

13. Procédé selon la revendication 3 ou 11, dans lequel la demande de transfert envoyée par le MSC à la cellule cible comprend : le paramètre d'appel privé et l'information pertinente de la cellule cible ;
l'étape de détermination d'un canal devant être affecté à la MS du locuteur privé par la cellule cible comprend :
l'activation d'un canal dans la cellule cible en fonction du paramètre d'appel privé et du type de canal demandé par la cellule cible.

14. Procédé selon la revendication 1, dans lequel l'étape de lancement de l'établissement d'une connexion d'interface par l'air entre la MS du locuteur privé et la cellule cible par la MS du locuteur privé comprend :
le compte rendu (109), par la MS du locuteur privé, d'un message comprenant un accès de transfert à la cellule cible ;
le retour (111), par la cellule cible, d'une information physique à la MS du locuteur privé après la réception du message d'accès pour le transfert ;
le renvoi (113), par la MS du locuteur privé, d'une trame de mode équilibré asynchrone établi, SABM (pour "Set Asynchronous Balanced Mode") à la cellule cible après la réception de l'information physique depuis la cellule cible et l'établissement d'une connexion d'interface par l'air.
